# EUROPÄISCHE PATENTSCHRIFT

(11) **EP 3 655 559 B1**
(45) Veröffentlichungstag und Bekanntmachung des Hinweises auf die Patenterteilung: **08.09.2021**
(21) Anmeldenummer: 18789002.5
(22) Anmeldetag: 25.09.2018
(51) Int. Cl.: C22C 27/04, B22F 3/105, B22F 10/20, B33Y 10/00, B33Y 70/00, C22C 1/04

(54) **PULVER AUS EINER MOLYBDÄN, SILIZIUM UND BOR ENTHALTENDEN LEGIERUNG, VERWENDUNG DIESES PULVERS UND ADDITIVES HERSTELLUNGSVERFAHREN FÜR EIN WERKSTÜCK AUS DIESEM PULVER**
POWDER MADE OF AN ALLOY CONTAINING MOLYBDENUM, SILICON AND BORON, USE OF SAID POWDER AND ADDITIVE PRODUCTION METHOD FOR A WORKPIECE MADE OF SAID POWDER
POUDRE D'UN ALLIAGE CONTENANT DU MOLYBDÈNE, DU SILICIUM ET DU BORE, UTILISATION DE CETTE POUDRE ET PROCÉDÉ DE FABRICATION ADDITIVE D'UNE PIECE DE TRAVAIL A PARTIR DE CETTE POUDRE

(30) Priorität: 26.09.2017 DE 102017217082
(43) Veröffentlichungstag der Anmeldung: 27.05.2020
(73) Patentinhaber: Siemens Energy Global GmbH & Co. KG, 81739 München (DE)
(72) Erfinder: HEINZE, Christoph, 10317 Berlin (DE)
(86) Internationale Anmeldenummer: PCT/EP2018/075847
(87) Internationale Veröffentlichungsnummer: WO 2019/063498

(56) Entgegenhaltungen:
- US-A1- 2006 285 990
- US-A1- 2016 273 368
- SANJIB MAJUMDAR ET AL: "A Study on Effect of Reactive and Rare Earth Element Additions on the Oxidation Behavior of Mo-Si-B System", OXIDATION OF METALS, Bd. 80, Nr. 3-4, 8. Februar 2013 (2013-02-08), Seiten 219-230, XP055147462, ISSN: 0030-770X, DOI: 10.1007/s11085-013-9374-2
- YU J L ET AL: "Tensile properties of multiphase MoSiB refractory alloys at elevated temperatures", MATERIALS SCIENCE AND ENGINEERING: A, ELSEVIER, AMSTERDAM, NL, Bd. 532, 1. November 2011 (2011-11-01), Seiten 392-395, XP028394516, ISSN: 0921-5093, DOI: 10.1016/J.MSEA.2011.11.001 [gefunden am 2011-11-10]

## Beschreibung

Die Erfindung betrifft ein Pulver bestehend aus einer Molybdän, Silizium und Bor enthaltenden Legierung des Typs Mo(x)Si(y)B. Der Legierungsanteil x von Silizium liegt bei dieser Legierung bei mindestens 8 At-% und höchstens 19 At-%, bevorzugt bei mindestens 10 At-% und höchstens 15 At-%. Der Legierungsanteil y von Bor liegt bei mindestens 5 At-% und höchstens 13 At-%, bevorzugt bei mindestens 8 At-% und höchstens 12 At-%. Weiterhin betrifft die Erfindung die Verwendung eines solchen Pulvers. Zuletzt betrifft die Erfindung ein Verfahren zur Herstellung eines Werkstücks unter Verwendung des genannten Pulvers, wobei ein pulverbettbasiertes additives Fertigungsverfahren zum Einsatz kommt. Bei diesem wird das Pulver in Pulverlagen eines Pulverbetts zur Herstellung der aufeinanderfolgenden Lagen des Werkstücks durch einen Energiestrahl aufgeschmolzen.

Molybdän-Silizium-Bor-Legierungen sind beispielsweise aus der EP 1 664 362 B1 bekannt. Diese Legierungen bilden ein Gefüge, bestehend aus intermetallischen Phasen wie Molybdän-Silizid und Molybdän-Bor-Silizid und Molybdän-Borid aus, wobei der Summengehalt der intermetallischen Phasen zwischen 25 und 90 Vol-% liegen kann und der Rest des Gefüges aus Molybdän oder einem Molybdän-Mischkristall besteht. Diese Legierungen können aufgrund ihrer mechanischen Festigkeitseigenschaften für Hochtemperaturanwendungen eingesetzt werden. Eine Verwendung kann beispielsweise für thermisch hochbelastete Bauteile von Gasturbinen erfolgen, wie der DE 10 2015 209 583 A1 zu entnehmen ist.

Die DE 10 2015 209 583 A1 beschreibt außerdem, dass die Verarbeitung der genannten Legierungen durch pulvermetallurgische Verfahren (beispielsweise Heißpressen) oder durch Zonenschmelzverfahren verarbeitet werden können. Um auch Bauteile mit einer komplexen Geometrie herstellen zu können, wird außerdem vorgeschlagen, dass ein Pulver aus der genannten Legierung in einem additiven Herstellungsverfahren verwendet werden kann, indem das Pulver lagenweise aufgetragen und selektiv durch einen Energiestrahl verfestigt wird.

Die US 2016/0273368 A1 offenbart eine Schaufel einer Strömungsmaschine aus unterschiedlichen Werkstoffen und Verfahren zur Herstellung derselben. Eine Metallmatrix, in die intermetallische Phasen zur Bildung eines metallischintermetallischen Verbundwerkstoffs eingebettet sind, ist aus einer Molybdänlegierung gebildet. Eine beschriebene Molybdänlegierung umfasst Legierungsanteile von 9 bis 15 at.% aus Silizium, 5 bis 12 at.% aus Bor und 18 bis 32 at.% aus Titan, wobei ein Restanteil zu 100 at.% aus Molybdän besteht.

In der wissenschaftlichen Veröffentlichung von Majumdar, Sanjib, et al. "A study on effect of reactive and rare earth element additions on the oxidation behavior of Mo-Si-B system." Oxidation of metals 80.3-4 (2013): 219-230; wurde die Wirkung einer Beimischung von reaktiven Elementen und Seltenen Erden auf das Oxidationsverhalten von Mo-Si-B-Legierungen untersucht. Die untersuchten Legierungen umfassen Mo-9Si-8B-1Ti und Mo-9Si-8B-1,8Ti.

Der wissenschaftliche Artikel von Yu, J. L., et al. "Tensile properties of multiphase Mo-Si-B refractory alloys at elevated temperatures." Materials Science and Engineering: A 532 (2012): 392-395; beschreibt Untersuchungen über die Zugeigenschaften von mehrphasigen Mo-Si-B-Legierungen im Vakuum bei Temperaturen von 1400 bis 1560 Grad Celsius. Die untersuchten Legierungen weisen eine Zusammensetzung von Mo-9Si-8B-3Hf und Mo-10Si-14B-3Hf (at.%) auf.

In der US 2006/0285990 A1 ist ein Verfahren zur Herstellung einer Molybdänlegierung offenbart. Durch Anwendung des offenbarten Verfahrens wurden beispielsweise Mo-3Si-1B-3Nb, Mo-3Si-1B-10Nb und Mo-3Si-1B-20Nb gefertigt.

Als additive Fertigungsverfahren im Sinne dieser Anmeldung sollen Verfahren verstanden werden, bei denen das Material, aus dem ein Bauteil hergestellt werden soll, dem Bauteil während der Entstehung hinzugefügt wird. Dabei entsteht das Bauteil bereits in seiner endgültigen Gestalt oder zumindest annähernd in dieser Gestalt.

Um das Bauteil herstellen zu können, werden das Bauteil beschreibende Daten (CAD-Modell) für das gewählte additive Fertigungsverfahren aufbereitet. Die Daten werden zur Erstellung von Anweisungen für die Fertigungsanlage in an das Fertigungsverfahren angepasste Daten eines herzustellenden Werkstücks umgewandelt, damit in der Fertigungsanlage die geeigneten Prozessschritte zur sukzessiven Herstellung dieses Werkstücks ablaufen können. Die Daten werden dafür so aufbereitet, dass die geometrischen Daten für die jeweils herzustellenden Lagen (Slices) des Werkstücks zur Verfügung stehen, was auch als Slicen bezeichnet wird. Das Werkstück kann eine vom Bauteil abweichende Gestalt haben. Beispielsweise kann ein herstellungsbedingter Bauteilverzug berücksichtigt werden, der durch eine abweichende Werkstückgeometrie kompensiert wird. Auch weist das Werkstück gewöhnlich Stützstrukturen auf, die bei einer Nachbearbeitung des Bauteils wieder entfernt werden müssen.

Als Beispiele für das additive Fertigen können das selektive Lasersintern (auch SLS für Selective Laser Sintering), das Selektive Laserschmelzen (auch SLM für Slective Laser Melting) und das Elektronenstrahlschmelzen (auch EBM für Electron Beam Melting) genannt werden. Diese Verfahren eignen sich insbesondere zur Verarbeitung von metallischen Werkstoffen in Form von Pulvern, mit denen Konstruktionsbauteile hergestellt werden können.

Beim SLM, SLS und EBM werden die Bauteile lagenweise in einem Pulverbett hergestellt. Diese Verfahren werden daher auch als pulverbettbasierte additive Fertigungsverfahren bezeichnet. Es wird jeweils eine Lage des Pulvers in dem Pulverbett erzeugt, die durch die Energiequelle (Laser oder Elektronenstrahl) anschließend in denjenigen Bereichen lokal aufgeschmolzen oder gesintert wird, in denen das Bauteil entstehen soll. So wird das Bauteil sukzessive lagenweise erzeugt und kann nach Fertigstellung dem Pulverbett entnommen werden.
Bei der additiven Herstellung von Bauteilen aus Molybdän-Silizium-Bor-Legierungen treten jedoch schnell Probleme auf. Die additiv gefertigten Bauteile weisen dann Risse auf bzw. erreichen nicht die geforderten mechanischen Festigkeiten.
Es ist daher Aufgabe der Erfindung, ein Pulver der eingangs angegebenen Art, dessen Verwendung und ein Verfahren zum additiven Herstellen von Bauteilen aus diesem Pulver anzugeben, mit dem sich additiv Werkstücke mit einer hohen Qualität, insbesondere verbesserten mechanischen Eigenschaften, erzeugen lassen.

Die genannte Aufgabe wird durch das Pulver gemäß Anspruch gelöst.

Die Zulegierung von Titan oder Hafnium ist mit dem Vorteil verbunden, dass aus der Legierung hergestellte Bauteile eine verbesserte Kriechbeständigkeit aufweisen. Insbesondere kann das Pulver mittels eines pulverbettbasierten additiven Fertigungsverfahrens verarbeitet werden, wodurch die auf die Verwendung gerichtete Aufgabe erfindungsgemäß gelöst wird. Die Zulegierung von Eisen verbessert insbesondere auch die Oxidationsbeständigkeit der Legierung.

Die auf das Verfahren gerichtete Aufgabe wird durch das Verfahren gemäß Anspruch 5 gelöst. Hierbei wird bei einem pulverbettbasierten additiven Herstellungsverfahren zur Verarbeitung das Pulverbett auf ein Temperaturniveau erwärmt, das mindestens 50 °C oberhalb der Spröd-Duktil-Übergangstemperatur (auch Brittle-to-Ductil Transition Temperatur, im Folgenden kurz BDTT genannt) der Legierung des Pulvers liegt. Es hat sich nämlich gezeigt, dass die mechanischen Qualitätsprobleme der additiv hergestellten Bauteile, insbesondere die Neigung zur Rissbildung, verringert werden können, wenn eine Abkühlung des in Herstellung befindlichen Werkstücks auf ein Temperaturniveau unterhalb der BDTT zuverlässig verhindert wird. Das eingestellte Temperaturniveau sieht mit einem Temperaturbereich von 50°C oberhalb der BDTT eine Pufferzone vor, um einen Übergang der duktilen Eigenschaften des Gefüges des hergestellten Werkstücks zu einem spröden Verhalten zuverlässig zu verhindern. Spannungen im Werkstück, die herstellungsbedingt aufgrund des auftretenden Temperaturgradienten im Werkstück auftreten, initiieren daher vorteilhaft keine (oder zumindest weniger) Risse im Gefüge. Nach Fertigstellung des Werkstücks kann dieses dann mit einer homogeneren Temperaturverteilung abkühlen, da ein lokaler Wärmeeintrag durch den Energiestrahl zwecks Verfestigung des Pulvers nicht mehr erforderlich ist.

Andererseits hat es sich gezeigt, dass die schnelle Abkühlung des Schmelzbads während der Herstellung die Ausbildung des gewünschten Gefüges in dem Werkstück begünstigt. Es bildet sich eine Faser-Matrix-Gefügestruktur aus, die die mechanischen Eigenschaften des Gefüges verbessern. Die Gefügestruktur besteht aus einzelnen Phasen einer Molybdän-Matrix Moss, Molybdän-Silizid Mo₃Si, Molybdän-Bor-Silizid Mo₅SiB₂ und weiteren Siliziden (Mo,X)₅Si₃. Die Molybdän-Matrix besteht aus Molybdän oder einem Molybdän-Mischkristall. Die Silizide liegen als kristalline Ausscheidungen vorzugsweise faserförmig vor. Das Legierungselement X wird durch Titan und/oder Hafnium und/oder Niob zur Verfügung gestellt, je nach Legierungszusammensetzung (hierzu im Folgenden noch mehr).

Gemäß einer vorteilhaften Ausgestaltung der Erfindung ist vorgesehen, dass das zumindest eine weitere Legierungselement aus Hafnium mit einem Legierungsanteil von mindestens 5 At-% und höchstens 8 At-% besteht oder aus Eisen mit einem Legierungsanteil von mindestens 1,5 At-% und höchstens 1,9 At-% besteht und ein Legierungselement des zumindest einen weiteren Legierungselements aus Titan mit einem Legierungsanteil von mindestens 5 At-% und höchstens 10 At-% besteht. Die Legierungselemente Hafnium, und Titan verbessern vor allem neben der bereits erwähnten Kriechbeständigkeit auch die Bruchzähigkeit und die Oxidationsbeständigkeit des Werkstücks, das Legierungselement Eisen insbesondere die Oxidationsbeständigkeit. Diese Eigenschaften sind für einen Betrieb eines aus dem Werkstück hergestellten Bauteils bei hohen Temperaturen von vorrangiger Bedeutung. Eine hohe Bruchzähigkeit verbessert die Eigenschaften des Bauteils, mechanischen Spannungsspitzen ohne die Initiierung von Rissen zu widerstehen. Die Oxidationsbeständigkeit ist insbesondere für Turbinenbauteile, die heißen Gasen ausgesetzt sind, von Bedeutung. Die Kriechbeständigkeit verhindert insbesondere bei rotierenden Bauteilen eine Deformation aufgrund der auftretenden Fliehkräfte.

Es wäre, nicht erfindungsgemäß, möglich, dass ein zusätzliches weiteres Legierungselement aus Niob mit einem Legierungsanteil von mindestens 15 At-% und höchstens 25 At-%, bevorzugt von mindestens 17 At-% und höchstens 21 At-% besteht. Außerdem das zumindest eine weitere Legierungselement vorgesehen, welches aus Hafnium mit einem Legierungsanteil von mindestens 5 At-% und höchstens 8 At-% oder aus Titan mit einem Legierungsanteil von mindestens 5 At-% und höchstens 10 At-% besteht. Niob verbessert neben der Kriechbeständigkeit des Bauteils vorteilhaft auch dessen allgemeine Festigkeit. Wird Niob daher mit einem der Legierungselemente Hafnium und Titan kombiniert, lässt sich das Anforderungsprofil vorteilhaft hinsichtlich der Festigkeit, der Bruchzähigkeit, der Oxidationsbeständigkeit und der Kriechbeständigkeit des Bauteils positiv beeinflussen. Ein solches Eigenschaftsprofil wäre auch durch eine Zusammensetzung des Pulvers erreichen, bei der das zumindest eine weitere Legierungselement das Legierungselement aus Titan mit einem Legierungsanteil von mindestens 5 At-% und höchstens 10 At-% umfasst, und das Legierungselement aus Hafnium mit einem Legierungsanteil von mindestens 5 At-% und höchstens 8 At-% beseht und ein zusätzliches weiteres Legierungselement aus Niob mit einem Legierungsanteil von mindestens 15 At-% und höchstens 25 At-%, bevorzugt von mindestens 17 At-% und höchstens 21 At-% besteht, wobei bevorzugt das Legierungselement des zumindest einen weiteren Legierungselements, bestehend aus Eisen mit einem Legierungsanteil von mindestens 1,5 At-% und höchstens 1,9 At-%, in der Legierung vorgesehen ist. Ein gleichzeitiges Zulegieren von Titan, Ti und Hafnium, Hf und Niob, Nb und optoional Eisen, Fe führt dabei zu einer vorteilhaften Erhöhung der Festigkeit (Nb), der Bruchzähigkeit (Ti, Hf), der Oxidationsbeständigkeit (Hf, Ti, Fe) und der Kriechbeständigkeit (Nb, Ti, Hf) der Legierung, wodurch das Anforderungsprofil an thermisch und mechanisch hochbelastete Bauteile wie Turbinenschaufeln optimal angepasst wird.

Durch Wahl der Legierungsanteile gemäß der oben angegebenen Ausprägungen kann damit vorteilhaft das Eigenschaftsprofil der aus dem Pulver hergestellten Bauteile an die Vorgaben des jeweiligen Anwendungsfalls angepasst werden. Hierbei spielen der Einsatzzweck sowie insbesondere auch die Einsatztemperatur eine große Rolle, da die Einsatztemperatur oberhalb der BDTT liegen muss, damit das Bauteil ein duktiles Werkstoffverhalten aufweist.

Die BDTT eines Bauteils hängt nicht zuletzt auch von dem sich in dem Bauteil einstellenden Gefüge ab. Deswegen ist es nach einer besonderen Ausgestaltung der Erfindung vorgesehen, dass die BDTT durch Prüfen einer Probe ermittelt wird, welche mit dem pulverbettbasierten additiven Fertigungsverfahren aus dem für das Bauteil zu verwendende Pulver hergestellt wurde. Insbesondere kann als Probe eine Vierpunkt-Biegeprobe hergestellt werden. Diese kann dann in einem Vierpunkt-Biegeversuch untersucht werden, um die Duktilität der Probe zu ermitteln. Die BDTT lässt sich ermitteln, indem die Proben bei unterschiedlichen Temperaturen geprüft werden, um die Temperatur zu ermitteln, bei der es zu einem Wechsel zwischen den duktilen und spröden Eigenschaften des Gefüges kommt. Beim Vierpunkt-Biegeversuch belastet ein Prüfstempel mit zwei Druckpunkten eine Probe, die auf zwei Punkten aufgelegt wird. Dabei besteht zwischen den Auflagepunkten ein konstantes Biegemoment. Alternativ können auch andere Biegeversuche, wie zum Beispiel ein Dreipunkt-Biegeversuch oder ein Zweipunkt-Biegeversuche, durchgeführt werden. Die Probe bei einem DreiPunkt-Biegeversuch wird an beiden Enden aufgelegt, während sie in der Mitte von einem Prüfstempel belastet wird. Reibungs- und Torsionsbelastungen der Proben müssen dabei minimiert werden. Für den Zwei-Punkt-Biegeversuch belastet ein Prüfstempel die freie Seite einer Probe, die einseitig eingespannt ist.

Eine andere Möglichkeit besteht darin, dass das Pulverbett auf ein Temperaturniveau erwärmt wird, das mindestens 700°C, insbesondere mindestens 1000°C beträgt. Oberhalb dieses Temperaturniveaus ist davon auszugehen, dass es oberhalb der BDTT liegt. Ein Temperaturniveau in diesem Bereich kann beispielsweise gewählt werden, um Proben für die Ermittlung der BDTT herzustellen. Bei späteren Anwendungen des Pulvers kann dann die ermittelte BDTT als Grundlage verwendet werden, damit eine Erwärmung des Pulverbetts nur soweit wie notwendig erfolgt. Dies führt vorteilhaft zu einer Energieeinsparung und verkürzt die Heizzeiten, weswegen die Durchführung des Verfahrens wirtschaftlicher wird.

Außerdem kann vorteilhaft vorgesehen werden, dass die Temperatur des Pulverbetts in einem von einer Oberfläche des Pulverbetts bis in eine Tiefe des Pulverbetts von 100 µm bis 500 µm sich erstreckenden Tiefenbereich auf den besagten Temperaturniveau gehalten wird. Mit anderen Worten erstreckt sich dieser Tiefenbereich von der Oberfläche zwischen 100 µm und 500 µm in die Tiefe des Pulverbettes. Es hat sich nämlich gezeigt, dass nicht das komplette Pulverbett temperiert werden muss, um das Auftreten von spannungsbedingten Rissen während der Herstellung zu verhindern. Es genügt, den lokalen Temperaturgradienten in der oberflächennahen Region des bereits hergestellten Werkstücks abzubauen.

Der Tiefenbereich kann gemäß einer anderen Ausgestaltung der Erfindung alternativ auch mit Bezugnahme auf die Schichtdicke der Pulverlage bestimmt werden. Danach erstreckt sich der Tiefenbereich von der Oberfläche des Pulverbetts bis zu einer dem Fünffachen bis Zehnfachen der Schichtdicke der Pulverlagen entsprechenden Tiefe des Pulverbetts.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Die einzige Figur zeigt ein Ausführungsbeispiel des erfindungsgemäßen Verfahrens in einer geschnitten dargestellten Laserschmelzanlage.

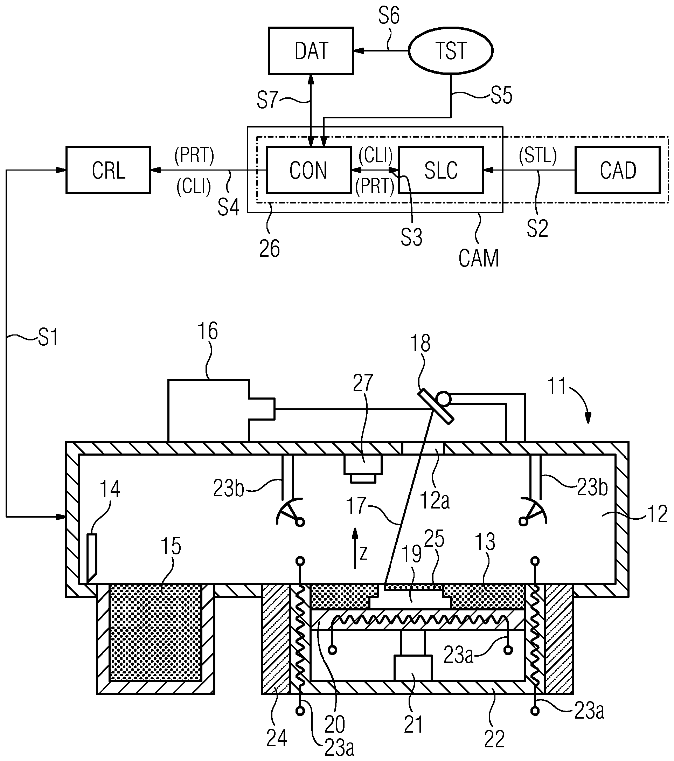

In Figur 1 ist eine Anlage 11 zum Laserschmelzen schematisch darstellt. Diese weist eine Prozesskammer 12 mit einem Fenster 12a auf, in der ein Pulverbett 13 hergestellt werden kann. Zur Herstellung jeweils einer Lage des Pulverbettes 13 wird eine Verteilungseinrichtung in Form einer Rakel 14 über einen Pulvervorrat 15 und anschließend über das Pulverbett 13 bewegt, wodurch eine dünne Schicht an Pulver im Pulverbett 13 entsteht, die eine oberste Lage 25 des Pulverbettes bildet. Ein Laser 16 erzeugt dann einen Laserstrahl 17, der mittels einer optischen Umlenkvorrichtung mit Spiegel 18 durch das Fenster 12a in die Prozesskammer 12 gelangt und über die Oberfläche des Pulverbettes 13 bewegt wird. Dabei wird das Pulver am Auftreffpunkt des Laserstrahls 17 aufgeschmolzen, wodurch ein Werkstück 19 entsteht.

Das Pulverbett 13 entsteht auf einer Bauplattform 20, welche über einen Aktor 21 in einem topfförmigen Gehäuse 22 schrittweise um jeweils eine Pulverlagendicke abgesenkt werden kann. In dem Gehäuse 22 sowie der Bauplattform 20 sind Heizeinrichtungen 23a in Form von elektrischen Widerstandsheizungen (alternativ sind auch Induktionsspulen möglich, nicht dargestellt) vorgesehen, welche das in Entstehung befindliche Werkstück 19 sowie die Partikel des Pulverbettes 13 vorwärmen können. Alternativ oder zusätzlich können auch Infrarotstrahler als Heizeinrichtungen 23b in der Prozesskammer 12 angeordnet werden, um die Oberfläche des Pulverbetts 13 zu bestrahlen und dadurch zu erwärmen. Um den Energiebedarf zur Vorwärmung zu begrenzen, befindet sich an dem Gehäuse 22 außen eine Isolation 24 mit geringer thermischer Leitfähigkeit. Die Temperatur an der Oberfläche des Pulvers 13 kann durch eine Wärmebildkamera 27 ermittelt werden, um im Bedarfsfall die Heizleistung der Heizeinrichtungen 23a, 23b anzupassen. Alternativ zu der Wärmebildkamera 27 können auch Temperatursensoren am Pulverbett verwendet werden (nicht dargestellt).

Die Anlage 11 zum Laserschmelzen wird über eine erste Schnittstelle S1 durch eine Steuereinrichtung CRL kontrolliert, welche vorher mit geeigneten Prozessdaten versorgt werden muss. Hierzu dient ein Computerprogrammprodukt 26, welches aus mehreren Programmmodulen besteht. Zur Vorbereitung der Herstellung des Werkstücks 19 ist es zunächst erforderlich, in einem Konstruktionsprogrammmodul CAD die dreidimensionalen Geometriedaten des Werkstücks zu erstellen. Der so erstellte Geometriedatensatz STL (beispielsweise ein STL-File) wird über eine zweite Schnittstelle S2 an ein System zur Fertigungsvorbereitung CAM übergeben. Auf dem System zur Fertigungsvorbereitung CAM sind ein Erstellungsprogrammmodul CON und ein Transformationsprogrammmodul SLC installiert. Das Erstellungsprogrammmodul CON und das Transformationsprogrammmodul SLC kommunizieren über eine dritte Schnittstelle S3 miteinander. Im Transformationsprogrammmodul SLC wird der Konstruktionsdatensatz STL (empfangen über die zweite Schnittstelle S2) in einen Fertigungsdatensatz CLI (beispielsweise ein CLI-File) umgewandelt, der das Werkstück 19 in den herzustellenden Lagen beschreibt. Dieser Transformationsprozess wird auch als Slicen bezeichnet. Außerdem werden von dem Erstellungsprogrammmodul CON Verfahrensparameter PRT festgelegt, die auch die Erstellung des Fertigungsdatensatzes CLI beeinflussen und mit diesem über eine vierte Schnittstelle S4 an die Steuerung CRL übergegeben werden. Hierbei handelt es sich um Fertigungsparameter, die von der Steuerung CRL in Maschinenbefehle für die Anlage 11 umgesetzt werden können. Das Erstellungsprogrammmodul CON berücksichtigt bei der Bestimmung der Verfahrensparameter PRT auch Erkenntnisse, die im Rahmen von Testverfahren TST durch die Untersuchung von vormals additiv hergestellten Proben mittels Vierpunkt-Biegeversuchen ermittelt wurden. Hierbei handelt es sich für einen bestimmten Legierungstyp beispielsweise um die BDTT, die bei bestimmten Verfahrensparametern des additiven Fertigungsverfahrens mit den hergestellten Vierpunkt-Biegeproben ermittelt wurden. Diese können dem Erstellungsprogrammodul CON über eine Schnittstelle S5 zur Verfügung gestellt werden. Gleichzeitig können diese Testergebnisse über eine Schnittstelle S6 einer Datenbank DAT zur Verfügung gestellt werden. Die Datenbank DAT ist über eine Schnittstelle S7 ebenfalls mit dem Erstellungsprogrammodul CON verbunden, so dass auf einmal erstellte Messergebnisse und die zugehörigen Verfahrensparameter und Legierungszusammensetzungen zurückgegriffen werden kann und nicht bei jedem Bauteil erneute Untersuchungen erforderlich sind.

Es kann mit einer Scangeschwindigkeit des Laserstrahls von mindestens 500 mm/s und höchstens 2000 mm/s, bevorzugt von mindestens 800 mm/s und höchstens 1200 mm/s, mit einer Laserleistung von mindestens 125 W und höchstens 250W, bevorzugt von mindestens 150 W und höchstens 250 W, mit einem Spurabstand von mindestens 60 und höchstens 130 µm, bevorzugt von mindestens 80 und höchstens 120 µm und mit einer Schichtdicke der Pulverlagen von mindestens 20 µm und höchstens 50 µm gearbeitet werden.

Zum Laserschmelzen kann ein Pulver mit Korngrößen von mindestens 10 µm und höchstens 45 µm verwendet werden, wobei eine Größenverteilung D50 (d.h. 50 % der Partikel sind kleiner als dieser Wert) mindestens 17 µm und höchstens 27 µm beträgt. Pulver mit einer derartigen Größenverteilung lassen sich vorteilhaft gut mit pulverbettbasierten additiven Fertigungsverfahren herstellen, da diese sich zuverlässig im Pulverbett dosieren lassen.

## Patentansprüche

1. Pulver, bestehend aus einer Molybdän, Silizium und Bor enthaltenden Legierung des Typs Mo(x)Si(y)B, wobei
der Legierungsanteil x von Silizium bei mindestens 8 At-% und höchstens 19 At-%, bevorzugt bei mindestens 10 At-% und höchstens 15 At-%, liegt
und
der Legierungsanteil y von Bor bei mindestens 5 At-% und höchstens 13 At-%, bevorzugt bei mindestens 8 At-% und höchstens 12 At-%, liegt,
**dadurch gekennzeichnet,**
**dass** außerdem zumindest ein weiteres Legierungselement, bestehend aus Titan mit einem Legierungsanteil von mindestens 5 At-% und höchstens 10 At-%
und/oder
bestehend aus Hafnium mit einem Legierungsanteil von mindestens 5 At-% und höchstens 8 At-%
und/oder
bestehend aus Eisen mit einem Legierungsanteil von mindestens 1,5 At-% und höchstens 1,9 At-%
in der Legierung vorgesehen ist,
und
ein verbleibender Legierungsanteil zu 100 At-% aus Molybdän und eventuellen Verunreinigungen besteht.

2. Pulver nach Anspruch 1,
**dadurch gekennzeichnet,**
**dass** das zumindest eine weitere Legierungselement aus Hafnium mit einem Legierungsanteil von mindestens 5 At-% und höchstens 8 At-% besteht
oder
aus Eisen mit einem Legierungsanteil von mindestens 1,5 At-% und höchstens 1,9 At-% besteht
und
**dass** ein Legierungselement des zumindest einen weiteren Legierungselements
aus Titan mit einem Legierungsanteil von mindestens 5 At-% und höchstens 10 At-%, in der Legierung besteht.

3. Pulver nach einem der Ansprüche 1 oder 2,
**dadurch gekennzeichnet,**
**dass** die Korngröße des Pulvers von mindestens 10 µm und höchstens 45 µm liegt, bevorzugt mit einer massebezogenen Größenverteilung D50 von mindestens 17 µm und höchstens 27 µm.

4. Verwendung eines Pulvers nach einem der Ansprüche 1 bis 3 in einem pulverbettbasierten additiven Fertigungsverfahren, bei dem das Pulver in Pulverlagen (25) eines Pulverbettes (13) zur Herstellung aufeinanderfolgender Lagen eines Werkstücks (19) durch einen Energiestrahl (17) aufgeschmolzen wird.

5. Verfahren zur Herstellung eines Werkstücks (19) unter Verwendung eines Pulvers nach einem der Ansprüche 1 bis 3, in einem pulverbettbasierten additiven Fertigungsverfahren, bei dem das Pulver in Pulverlagen (25) eines Pulverbettes (13) zur Herstellung aufeinanderfolgender Lagen eines Werkstücks (19) durch einen Energiestrahl (17) verfestigt wird,
**dadurch gekennzeichnet,**
**dass** das Pulverbett (13) auf ein Temperaturniveau erwärmt wird, das mindestens 50 °C oberhalb der Spröd-Duktil-Übergangstemperatur der Legierung des Pulvers liegt.

6. Verfahren nach Anspruch 5,
**dadurch gekennzeichnet,**
**dass** die Spröd-Duktil-Übergangstemperatur durch Prüfen einer Probe ermittelt wird, welche mit dem pulverbettbasierten additiven Fertigungsverfahren aus dem Pulver hergestellt wurde.

7. Verfahren nach Anspruch 6,
**dadurch gekennzeichnet,**
**dass** als Probe eine Vierpunkt-Biegeprobe hergestellt wird.

8. Verfahren nach einem der Ansprüche 5 bis 7,
**dadurch gekennzeichnet,**
**dass** das Pulverbett (13) auf ein Temperaturniveau erwärmt wird, das mindestens 700 °C insbesondere mindestens 1000 °C beträgt.

9. Verfahren nach einem der Ansprüche 5 bis 8,
**dadurch gekennzeichnet,**
**dass** die Temperatur des Pulverbettes (13) in einem Tiefenbereich, der sich von einer Oberfläche des Pulverbettes (13) bis in eine Tiefe des Pulverbettes (13) zwischen 100 µm und 500 µm erstreckt, auf dem Temperaturniveau gehalten wird.

10. Verfahren nach einem der Ansprüche 5 bis 9,
**dadurch gekennzeichnet,**
**dass** die Temperatur des Pulverbettes in einem Tiefenbereich, der sich von einer Oberfläche des Pulverbettes bis zu einer dem fünffachen bis zehnfachen der Schichtdicke der Pulverlagen (25) entsprechenden Tiefe des Pulverbettes erstreckt, auf dem Temperaturniveau gehalten wird.

11. Verfahren nach einem der Ansprüche 5 bis 10,
**dadurch gekennzeichnet,**
**dass** als additiven Fertigungsverfahren ein selektives Laserschmelzen eingesetzt wird,
mit einer Scangeschwindigkeit des Energiestrahls (17) von mindestens 500 mm/s und höchstens 2000 mm/s, bevorzugt von mindestens 800 mm/s und höchstens 1200 mm/s,
mit einer Laserleistung von mindestens 125 W und höchstens 250W, bevorzugt von mindestens 150 W und höchstens 250 W, mit einem Spurabstand von mindestens 60 und höchstens 130 µm, bevorzugt von mindestens 80 und höchstens 120 µm und mit einer Schichtdicke der Pulverlagen (25) von mindestens 20 µm und höchstens 50 µm.

## Claims

1. Powder consisting of a molybdenum-, silicon- and boron-containing alloy of the type Mo(x)Si(y)B, wherein the alloying fraction x of silicon is at least 8 at% and at most 19 at%, preferably at least 10 at% and at most 15 at%, and
the alloying fraction y of boron is at least 5 at% and at most 13 at%, preferably at least 8 at% and at most 12 at%, **characterized in that**
additionally provided in the alloy is at least one further alloying element
consisting of titanium having an alloying fraction of at least 5 at% and at most 10 at%,
and/or
consisting of hafnium having an alloying fraction of at least 5 at% and at most 8 at%,
and/or
consisting of iron having an alloying fraction of at least 1.5 at% and at most 1.9 at%
and
a remaining alloying fraction to 100 at% consists of molybdenum and any impurities.

2. Powder according to Claim 1,
**characterized in that**
the at least one further alloying element
consists of hafnium having an alloying fraction of at least 5 at% and at most 8 at%,
or
consists of iron having an alloying fraction of at least 1.5 at% and at most 1.9 at%
and
**in that** an alloying element of the at least one further alloying element
consists of titanium having an alloying fraction of at least 5 at% and at most 10 at% in the alloy.

3. Powder according to either of Claims 1 and 2,
**characterized in that**
the particle size of the powder is at least 10 µm and at most 45 µm, preferably with a D50 size distribution based on mass of at least 17 µm and at most 27 µm.

4. Use of a powder according to any of Claims 1 to 3 in a powder bed-based additive manufacturing process in which the powder is melted by an energy beam (17) in powder layers (25) of a powder bed (13) to produce consecutive layers of a workpiece (19).

5. Process for producing a workpiece (19) using a powder according to any of Claims 1 to 3 in a powder bed-based additive manufacturing process in which the powder is consolidated by an energy beam (17) in powder layers (25) of a powder bed (13) to produce consecutive layers of a workpiece (19),
**characterized in that**
the powder bed (13) is heated to a temperature level at least 50°C above the brittle-to-ductile transition temperature of the alloy of the powder.

6. Process according to Claim 5,
**characterized in that**
the brittle-to-ductile transition temperature is determined by testing a sample produced from the powder with the powder bed-based additive manufacturing process.

7. Process according to Claim 6,
**characterized in that**
a four-point bending sample is produced as the sample.

8. Process according to any of Claims 5 to 7,
**characterized in that**
the powder bed (13) is heated to a temperature level of at least 700°C, in particular at least 1000°C.

9. Process according to any of Claims 5 to 8,
**characterized in that**
the temperature of the powder bed (13) is kept at the temperature level in a depth range extending from a surface of the powder bed (13) down to a depth of the powder bed (13) of between 100 µm and 500 µm.

10. Process according to any of Claims 5 to 9,
**characterized in that**
the temperature of the powder bed is kept at the temperature level in a depth range extending from a surface of the powder bed down to a depth of the powder bed corresponding to five times to ten times the layer thickness of the powder layers (25).

11. Process according to any of Claims 5 to 10,
**characterized in that**
as the additive manufacturing process a selective laser melting is employed
with a scanning rate of the energy beam (17) of at least 500 mm/s and at most 2000 mm/s, preferably of at least 800 mm/s and at most 1200 mm/s,
with a laser power of at least 125 W and at most 250 W, preferably of at least 150 W and at most 250 W,
with a track spacing of at least 60 and at most 130 µm, preferably of at least 80 and at most 120 µm,
and with a layer thickness of the powder layers (25) of at least 20 µm and at most 50 µm.

## Revendications

1. Poudre en un alliage contenant du molybdène, du silicium et du bore, du type Mo(x)Si(y)B, dans laquelle la proportion x de silicium dans l'alliage est d'au moins 8 % en atome et d'au plus 19 % en atome, de préférence d'au moins 10 % en atome et d'au plus 15 % en atome,
et
la proportion y de bore dans l'alliage est d'au moins 5 % en atome et d'au plus 13 % d'atome, de préférence d'au moins 8 % en atome et d'au plus 12 % en atome,
**caractérisée**
**en ce qu'**en outre, il est prévu dans l'alliage au moins un autre élément d'alliage
constitué de titane en une proportion dans l'alliage d'au moins 5 % en atome et d'au plus 10 % en atome
et/ou
constitué d'hafnium en une proportion dans l'alliage d'au moins 5 % en atome et d'au plus 8 % en atome
et/ou
constitué de fer en une proportion dans l'alliage d'au moins 1,5 % en atome et d'au plus 1,9 % en atome
et
une proportion restante dans l'alliage à 100 % en atome de molybdène et d'impuretés éventuelles.

2. Poudre suivant la revendication 1,
**caractérisée**
**en ce que** le au moins un autre élément d'alliage est en hafnium en une proportion dans l'alliage d'au moins 5 % en atome et d'au plus 8 % en atome,
ou
est en fer en une proportion dans l'alliage d'au moins 1,5 % en atome et d'au plus 1,9 % en atome,
et
**en ce qu'**un élément du au moins un autre élément d'alliage est en titane en une proportion dans l'alliage d'au moins 5 % en atome et d'au plus 10 % en atome.

3. Poudre suivant l'une des revendications 1 ou 2,
**caractérisée**
**en ce que** la granulométrie de la poudre est d'au moins 10 µm et d'au plus 45 µm en ayant de préférence une répartition D50 de dimension rapportée à la masse d'au moins 17 µm et d'au plus 27 µm.

4. Utilisation d'une poudre suivant l'une des revendications 1 à 3 dans un procédé de fabrication additif reposant sur un lit de poudre, dans lequel on fait fondre par un faisceau (17) d'énergie la poudre dans des couches (25) de poudre d'un lit (13) de poudre pour la production de couches superposées d'une pièce (19).

5. Procédé de fabrication d'une pièce (19) en utilisant une poudre suivant l'une des revendications 1 à 3 dans un procédé de fabrication additif reposant sur un lit de poudre, dans lequel on solidifie par un faisceau (17) d'énergie la poudre dans des couches (25) de poudre d'un lit (13) de poudre pour la production de couches superposées d'une pièce (19),
**caractérisé**
**en ce que** l'on porte le lit (13) de poudre à un niveau de température qui est supérieur d'au moins 50 °C à la température de transition fragilité-ductilité de l'alliage de la poudre.

6. Procédé suivant la revendication 5,
**caractérisé**
**en ce que** l'on détermine la température de transition fragilité-ductilité en contrôlant une éprouvette qui a été fabriquée à partir de la poudre par le procédé de fabrication additif reposant sur un lit de poudre.

7. Procédé suivant la revendication 6,
**caractérisé**
**en ce que** l'on produit comme éprouvette une éprouvette de flexion à quatre points.

8. Procédé suivant l'une des revendications 5 à 7,
**caractérisé**
**en ce que** l'on porte le lit (13) de poudre à un niveau de température qui est d'au moins 700 °C, notamment d'au moins 1 000 °C.

9. Procédé suivant l'une des revendications 5 à 8,
**caractérisé**
**en ce que** l'on maintient au niveau de température la température du lit (13) de poudre dans une région en profondeur qui s'étend d'une surface du lit (13) de poudre jusqu'à une profondeur du lit (13) de poudre comprise entre 100 µm et 500 µm.

10. Procédé suivant l'une des revendications 5 à 9,
**caractérisé**
**en ce que** l'on maintient au niveau de température la température du lit de poudre dans une région en profondeur, qui s'étend d'une surface du lit de poudre jusqu'à une profondeur du lit de poudre correspondant de 5 fois à 10 fois l'épaisseur de couche des couches (25) de poudre.

11. Procédé suivant l'une des revendications 5 à 10,
**caractérisé**
**en ce qu'**on utilise comme procédé de fabrication additif une fusion laser sélective,
avec une vitesse de balayage du faisceau (17) d'énergie d'au moins 500 mm/s et d'au plus 2000 mm/s, de préférence d'au moins 800 mm/s et d'au plus 1 200 mm/s,
avec une puissance du laser d'au moins 125 W et d'au plus 250 W, de préférence d'au moins 150 W et d'au plus 250 W,
avec une distance entre trace d'au moins 60 et d'au plus 130 µm de préférence d'au moins 80 et d'au plus 120 µm
et avec une épaisseur de couche des couches (25) de poudre d'au moins 20 µm et d'au plus 50 µm.
